# EUROPÄISCHE PATENTANMELDUNG

(11) **EP 3 591 559 A1**
(43) Veröffentlichungstag der Anmeldung: **08.01.2020**
(21) Anmeldenummer: 18181330.4
(22) Anmeldetag: 03.07.2018
(51) Int. Cl.: G06F 21/57, G06F 21/64, H04L 9/32, G06F 21/50, G06F 21/56

(54) **STEUEREINHEIT UND BETRIEBSVERFAHREN FÜR EINE INTEGRITÄTSSELBSTÜBERWACHUNG GEEIGNET FÜR EIN INSBESONDERE IN EINER AUTOMATISIERUNGSUMGEBUNG VERWENDBARES GERÄT**

(71) Anmelder: Siemens Aktiengesellschaft, 80333 München (DE)
(72) Erfinder: Falk, Rainer, 85586 Poing (DE)

(57) **Zusammenfassung**

Die Erfindung beansprucht eine Steuereinheit (D) für eine Integritätsselbstüberwachung geeignet für ein insbesondere in einer Automatisierungsumgebung verwendbares Gerät, aufweisend:
- eine Bereitstellungseinheit (REFG), die dazu ausgelegt ist, eine kryptographisch geschützte Referenz-Integritätsinformation bereitzustellen, welche während einer geschützten Betriebsphase (SB) des Geräts erstellt wird,
- eine Vergleichseinheit (ICH), die dazu ausgelegt ist, die Referenz-Integritätsinformation (REFP) mit einer Laufzeit-Integritätsinformation zu vergleichen, die während einer operativen Betriebsphase des Geräts ermittelt wird, und
- einer Ausgabeeinheit (R), die dazu ausgelegt ist, eine zumindest eine Folgemaßnahme einleitenden Nachricht abhängig vom Vergleichsergebnis auszugeben.

## Beschreibung

Die Erfindung betrifft eine Steuereinheit und ein Betriebsverfahren für eine Integritätsselbstüberwachung geeignet für ein insbesondere in einer Automatisierungsumgebung verwendbares Gerät.

Es besteht ein Bedarf, um mit IT-Security-Mechanismen Produkte, beispielsweise Geräte (z.B. Steuereinheiten/-geräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten, zu übertragen, können die genannten Geräte mit einer Datenschnittstelle ausgestattet sein, die drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein. Mit Hilfe dieser Datenschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Bei kritischen IT-Systemen und Steuerungssystemen, insbesondere wenn sie in einer industriellen Automatisierungsumgebung eingesetzt werden, muss die Integrität im Betrieb gewährleistet werden. Dazu kann zum einen beim Startvorgang geprüft werden, dass tatsächlich zugelassene Software geladen wird (Secure Boot, Verified Boot), bzw. es kann ermittelt werden, welche Software geladen wurde (Trusted Boot, Measured Boot). Weiterhin kann im laufenden bzw. operativen Betrieb die Integrität von Dateien des Gerätes geprüft werden. Solche Prüfungen können auf dem Gerät selbst erfolgen. Es ist jedoch auch möglich, die erfassten Integritäts-Rohdaten (Messungen, Hash-Werte bzw. Einwegfunktionen von Programmen und anderen Dateien) als Plattform Konfiguration in einem Platform Configuration Register (PCR) zu erfassen, z.B. durch ein TPM-Modul (Trusted Platform Module), und den aktuellen Wert eines PCR-Registers kryptographisch geschützt zu bestätigen (Attestation) .

Es besteht ein Bedarf an einer verbesserten Geräteintegritäts-Selbstprüfung (Device Health Check).

Es ist Aufgabe der vorliegenden Erfindung, Verfahren und Vor- bzw. Einrichtungen bzw. Einheiten mit gegenüber dem oben genannten Stand der Technik insbesondere im Umfeld der Automatisierung zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Steuereinheit (Control Device) für eine Integritätsselbstüberwachung, geeignet für ein insbesondere in einer Automatisierungsumgebung verwendbares bzw. einsetzbares Gerät, aufweisend:
- eine Bereitstellungseinheit, die dazu ausgelegt ist, eine kryptographisch geschützte bzw. vertrauenswürdige Referenz-Integritätsinformation bereitzustellen, welche während einer geschützten Betriebsphase- bzw. Betriebsmodus des Geräts ermittelt und/oder erstellt bzw. gebildet wird,
- eine Vergleichseinheit, die dazu ausgelegt ist, die Referenz-Integritätsinformation mit einer Laufzeit-Integritätsinformation zu vergleichen bzw. abzugleichen, die während einer operativen Betriebsphase des Geräts ermittelt und/oder erstellt wird, und
- einer Ausgabeeinheit, die dazu ausgelegt ist, eine zumindest eine Folgemaßnahme einleitenden Nachricht abhängig vom Vergleichsergebnis auszugeben.

Wenn das Vergleichsergebnis eine Abweichung der genannten Integritätsinformationen repräsentiert, kann die Nachricht einen Alarm, einen Neustart, ein Löschen von Daten, ein Leuchten einer Diode und/oder ein Herstellen einer Schaltverbindung für die Folgemaßnahme einleiten.

Wenn das Vergleichsergebnis eine Übereinstimmung (wobei eine Abweichung bis zu einem vorgebbaren Grad zulässig sein kann) der Referenz-Integritätsinformation mit der Laufzeit-Integritätsinformation repräsentiert, kann eine Bestätigungsnachricht (Notification) ausgegeben werden.

In einer Ausführungsform der Erfindung kann die Bereitstellungseinheit eine kryptographische Prüfsumme, z.B. eine digitale Signatur oder einen Nachrichtenauthentisierungscode, der Referenz-Integritätsinformation bilden. In einer Ausführungsform der Erfindung kann die Steuer(ungs)einheit bzw. das Steuergerät weiterhin eine Prüfeinheit aufweisen, welche in einer operativen Betriebsphase die kryptographische Prüfsumme der Referenz-Integritätsinformation überprüft. Bei einer Abweichung kann eine zumindest eine Folgemaßnahme einleitenden Nachricht ausgegeben werden.

Weiterhin kann das Steuereinheit die verwendete Referenz-Integritätsinformation kryptographisch geschützt bereitstellen, sodass durch ein weiteres Gerät überprüfbar ist, welche Referenz-Integritätsinformation ein Gerät für seine Integritätsselbstüberwachung verwendet. Dazu kann die gleiche kryptographische Prüfsumme verwendet werden, die für eine Geräteinterne Prüfung der Referenz-Integritätsinformation durch die Prüfeinheit des Gerätes verwendet wird, oder eine weitere kryptographische Prüfsumme, die mit einem unterschiedlichen kryptographischen Schlüssel und/oder einem unterschiedlichen kryptographischen Verfahren gebildet wird.

Die Referenz-Integritätsinformation und die Laufzeit-Integritätsinformation können jeweils mindestens einen Wert für ein oder mehrere Integritätsprüfsummen von Dateien und/oder Konfigurationsdaten und/oder zumindest einen Informationswert zu ein oder mehreren Hardwarekomponenten des Geräts umfassen.

Eine Integritätsinformation kann Hardware-IDs von Bauteilen, verbundenen Baugruppen wie z.B. IO-Modulen, Kernel-Modulen, Apps, Prozessliste, zulässige Systemnutzer) umfassen. Die Referenz-Integritätsinformation kann durch eine Prüfsumme kryptographisch geschützt und/oder einen Gültigkeitsinformationswert aufweisen. Es ist möglich, die Referenz-Integritätsinformation als vorbereitete digital signierte Datenstruktur bereitzustellen. Sie könnte z.B. in einem Firmware-Image des Gerätes enthalten sein.

Die geschützte Betriebsphase läuft vorzugsweise während einer Startphase des Geräts ab und kann ein Secure/Regular Boot durchführen.

Der Schutz der Betriebsphase kann durch Beschränkungen erreicht werden. Beispiele für solche Beschränkungen sind der Zugriff auf bestimmte (I/O-)Komponenten bzw. Schnittstellen, Festlegen der Aktualisierbarkeit von Komponenten, Verwendung kryptographisch geschützter Firmware etc.)

Die Referenz-Integritätsinformation kann ereignisgesteuert ermittelt und/oder erstellt werden.

Als ein solches Ereignis ist folgendes möglich:
- Bei jedem Systemstart, nach Anlegen der Versorgungsspannung, nach Batteriewechsel
- Nach Schließen des Gerätegehäuses (Gehäuseschalter)
- Nach Montage des Gerätes (Montageschalter, der erkennt, wenn das Gerät auf einer Halterung aufgesetzt ist oder an einer Wand montiert ist)
- nach Einspielen eines Updates (Firmware, App-Update)
- nach einer Konfigurationsänderung, bei Beendigung eines Service-Modus
- Auf Benutzeranforderung
- Nach Ablauf einer Wartezeit (z.B. kann jeweils wöchentlich die Referenzinformation neu gebildet werden)

Weiterhin ist es möglich, dass eine neugebildete Referenz-Integritätsinformation auf Übereinstimmung, wobei eine Abweichung bis zu einem vorgebbaren Grad zulässig sein kann, mit einer zurückliegend gebildeten Referenz-Integritätsinformation geprüft bzw. verglichen wird. Bei einer Abweichung kann eine zumindest eine Folgemaßnahme einleitenden Nachricht abhängig vom Vergleichsergebnis ausgegeben werden. Dies hat den Vorteil, dass eine doppelte Integritätsüberprüfung erfolgt. Dadurch wird ein besonders hoher Schutz erreicht. Es wird die Übereinstimmung der mehreren, jeweils in einer geschützten Betriebsphase ermittelten Referenz-Integritätsinformationen durch die Vergleichtseinheit überprüft, sowie weiterhin die Übereinstimmung einer im regulären, operativen Betrieb ermittelten Laufzeit-Integritätsprüfinformation mit der aktuellen Referenz-Integritätsinformation. In einer Ausführungsform kann als Folgemaßnahme bei einer Abweichung der gebildeten Referenz-Integritätsinformation mit einer zurückliegend gebildeten Referenz-Integritätsinformation der reguläre Betriebsmodus der Steuereinheit gesperrt werden. Die Sperrung kann z.B. in einem Service-Betriebsmodus oder durch Betätigen eines Schalters oder eines Tasters aufgehoben werden, d.h. dass bei einer geänderten Referenz-Integritätsinformation eine explizite Freigabe erfolgen muss. Auch hierbei kann eine Abweichung bis zu einem vorgebbaren Grad zulässig sein.

Die Referenz-Integritätsinformation unter Verwendung eines Trusted Platform Module kann ermittelt und/oder erstellt und kryptographisch geschützt werden.

Mindestens ein Wert der Referenz-Integritätsinformation sollte attestiert werden kann.

Mehrere Werte der Referenz-Integritätsinformation können gegebenenfalls mit Zusatzinformationen in einer IMA-Liste (Integrity Measurement Architecture) organisiert sein. Z.B. sind eine PCR Registernummer, Template Hash Wert, Filedate, Hash Wert etc. eine mögliche Ausführungsform.

Die IMA-Liste kann mindestens einen Zufallswert (Nonce) umfassen.

Bei einer Integritäts-Selbstüberwachung benötigt das sich selbst überwachende Gerät eine vertrauenswürdige Referenz-Integritätsinformation, um die im laufenden Betrieb ermittelten Messungen zu prüfen.
Erfindungsgemäß erstellt bzw. generiert das Gerät selbst seine Referenz-Integritätsinformation zur Laufzeitintegritätsprüfung.

Erfindungsgemäß wird die Referenz-Integritätsinformation durch das Gerät selbst geschützt während einer geschützten Betriebsphase ermittelt. Diese geschützte Betriebsphase kann auch als Selbstintegritäts-Anlern-Betriebsphase bezeichnet werden. Es kann dabei eine durch eine kryptographische Prüfsumme manipulationsgeschützte Integritäts-Referenzinformation gebildet werden. Dazu ermittelt eine Integritätsmesseinheit die aktuelle Integritätsinformation. Diese IntegritätsInformation umfasst beispielsweise Integritätsprüfsummen von Dateien und Konfigurationsdaten, Information zu Hardwarekomponenten (Hardware-IDs von Bauteilen, verbundenen Baugruppen wie z.B. IO-Modulen, Kernel-Modulen, Apps, Prozessliste, zulässige Systemnutzer) und wird letztendlich als Referenz-Integritätsinformation bereitgestellt.

Ein weiterer Aspekt der Erfindung ist ein Betriebsverfahren für ein insbesondere in einer Automatisierungsumgebung verwendbares bzw. einsetzbares Gerät, wobei folgende Verfahrensschritte für eine Integritätsselbstüberwachung ausgeführt werden:
- Bereitstellen einer kryptographisch geschützten bzw. vertrauenswürdigen Referenz-Integritätsinformation, welche während einer geschützten Betriebsphase des Geräts ermittelt und/oder erstellt wird,
- Vergleichen (Abgleichen) der Referenz-Integritätsinformation mit einer Laufzeit-Integritätsinformation, die während einer operativen Betriebsphase des Geräts ermittelt und/oder erstellt wird,
- Ausgeben einer zumindest eine Folgemaßnahme einleitenden Nachricht abhängig vom Vergleichsergebnis.

Der Erfindung bringt den Vorteil mit sich, dass die bei einer Integritäts-Selbstüberwachung benötigte Referenz-Integritätsinformation vom Gerät selbst erstellt und somit nicht von anderen Geräten bzw. die Referenz-Integritätsinformation liefernde Services abhängig ist.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einer Steuereinheit der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Einrichtung und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
- Figur 1: Funktionsblöcke der erfindungsgemäßen Steuereinheit für die Erstellung einer Referenz-Integritätsinformation und
- Figur 2: Funktionsblöcke der erfindungsgemäßen Steuereinheit im operativen Betriebsmodus.

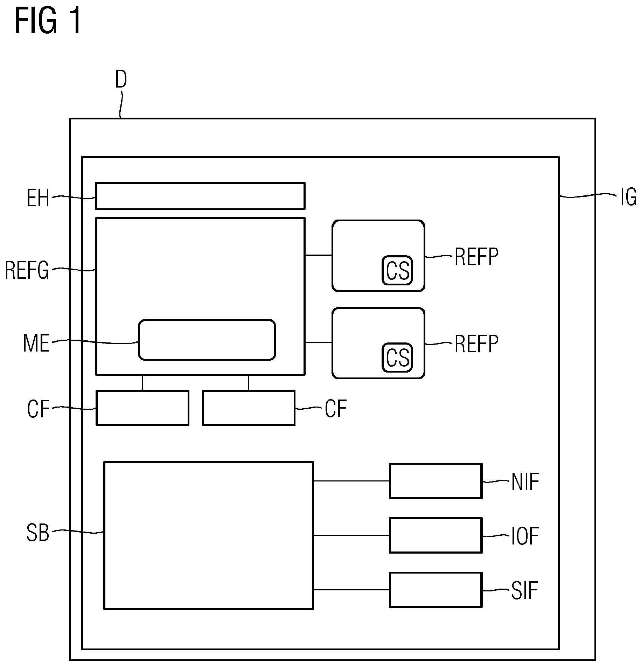

Figur 1 zeigt Funktionsblöcke der erfindungsgemäßen Steuereinheit bzw. Gerätes D, um eine Referenzintegritätsinformation, die mit einer kryptographischen Prüfsumme CS geschützt sein kann, zu erstellen bzw. generieren bzw. zu bilden. Dazu erfolgt eine spezielle geschützte Betriebsphase SB, vorzugsweise eine Startphase (Boot-Phase), die die Integrität der Prüffunktionen CF und des Referenz-Integritätsinformationsgenerators REFG sicherstellt. Weiterhin werden Geräteschnittstellen, z.B. eine Netzwerkschnittstelle NIF, Ein-/Ausgabeschnittstelle IOF und Service-Schnittstelle SIF, deaktiviert, damit sichergestellt ist, dass die Referenzintegritätsinformationswerte nicht durch einen Angreifer manipuliert werden können, der über eine solche Schnittstelle auf das Gerät zugreift. Eine Bereitstellungseinheit IG stellt dann die vom Referenz-Integritätsinformationsgenerators REFG erstellte Referenz-Integritätsinformation der Laufzeit-Integritätsselbstüberwachungsfunktion IC der Steuereinheit in der geschützten Betriebsphase bereit, damit die Laufzeit-Integritätsüberwachungsfunktion zur operativen Betriebsphase durchgeführt werden kann, mit der ein Vergleich der Referenz-Integritätsinformation mit einer Laufzeit-Integritätsinformation einhergeht.

Weiterhin ist es möglich, dass eine neugebildete Referenz-Integritätsinformation auf Übereinstimmung, wobei eine Abweichung bis zu einem vorgebbaren Grad zulässig sein kann, mit einer zurückliegend gebildeten Referenz-Integritätsinformation geprüft wird. Bei einer Abweichung kann eine zumindest eine Folgemaßnahme einleitenden Nachricht abhängig vom Vergleichsergebnis ausgegeben werden. Dies hat den Vorteil, dass eine doppelte Integritätsüberprüfung erfolgt. Dadurch wird ein besonders hoher Schutz erreicht. Es wird die Übereinstimmung der mehreren, jeweils in einer geschützten Betriebsphase ermittelten Referenz-Integritätsinformationen überprüft, sowie weiterhin die Übereinstimmung einer im regulären, operativen Betrieb ermittelten Laufzeit-Integritätsprüfinformation mit der aktuellen Referenz-Integritätsinformation. In einer Ausführungsform kann bei einer Abweichung der gebildeten Referenz-Integritätsinformation mit einer zurückliegend gebildeten Referenz-Integritätsinformation der reguläre Betriebsmodus der Steuereinheit gesperrt werden. Die Sperrung kann z.B. in einem Service-Betriebsmodus oder durch Betätigen eines Schalters oder eines Tasters aufgehoben werden, d.h. dass bei einer geänderten Referenz-Integritätsinformation eine explizite Freigabe erfolgen muss. Auch hierbei kann eine Abweichung bis zu einem vorgebbaren Grad zulässig sein.

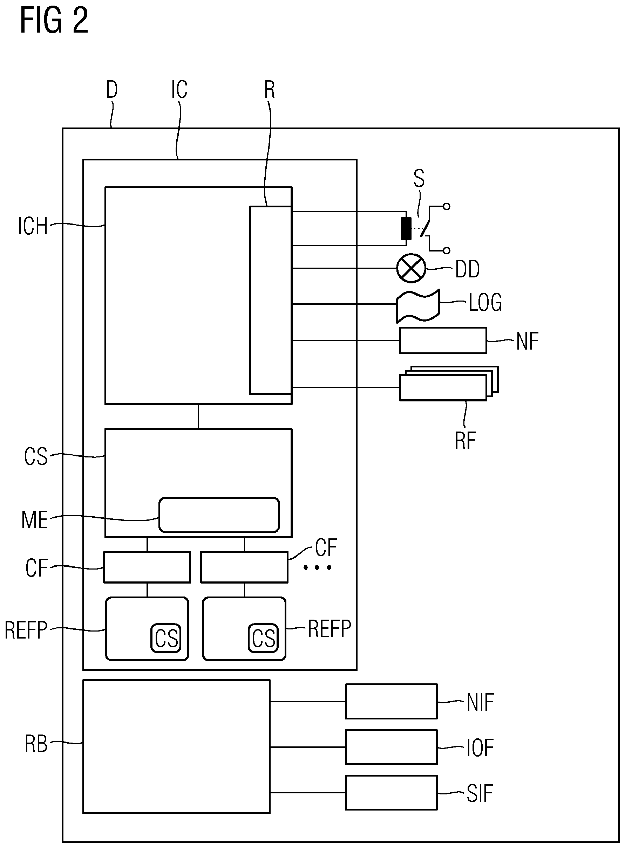

Figur 2 zeigt die Funktionsblöcke der erfindungsgemäßen Steuereinheit mit einer Laufzeit-Geräteintegritätsselbst-überwachung.

Während der regulären operativen Betriebsphase wird die angelernte, manipulationsgeschützte Integritäts-Referenzinformation verwendet, um die Integrität des Gerätes zu prüfen. Dazu ermittelt eine Integritätsmesseinheit ME die aktuelle Integritätsinformation. Es wird die Übereinstimmung mit der Laufzeitintegritätsinformation mit der Referenzintegritätsinformation durch eine Vergleichseinheit ICH geprüft. Weiterhin wird die kryptographische Prüfsumme z.B. eine digitale Signatur oder einen Nachrichtenauthentisierungscode der Integritäts-Referenzinformation vorzugsweise durch eine Prüfeinheit CS geprüft. Bei einer Abweichung kann eine zumindest eine Folgemaßnahme einleitenden Nachricht ausgegeben werden. Bei Abweichung wird eine solche Nachricht z.B. eine Alarmnachricht NF bereitgestellt, eine Folgemaße z.B. ein Aufleuchten einer Diode DD, ein Mitprotokollieren in einem Logfile LOG eingeleitet, das Gerät durch eine Folgemaßnahmefunktion RF neu gestartet, ein Schaltsignal S durch eine Ausgabeeinheit R ausgegeben oder ggf. Konfigurationsdaten (insbesondere kryptographische Schlüssel) gelöscht. Die Betriebsphasen (Anlernen SB, regulär RB) können durch ein unterschiedlich striktes Secure Boot geschützt sein:
- "Starkes" Secure Boot der Laufzeitintegritäts-Selbstüberwachungsfunktion. Dadurch ist sichergestellt, dass beim Erfassen bzw. Ermitteln. der Integritäts-Referenzinformation keine manipulierte Software ausgeführt wird.
- Offenes Boot oder ein offeneres Secure Boot für den operativen Betrieb bzw. Regelbetrieb: Hier können weitere Software-Komponenten flexibler gestartet werden. Es ist dennoch überprüfbar, dass zumindest die im Anlern-Betriebsmodus ermittelten Integritäts-Messdaten korrekt sind und diese auch im offeneren Betriebsmodus gelten. Dies wird durch die Laufzeitintegritatsüberwachung erreicht. Es wird also die hohe Sicherheit eines strikten "Secure Boot" in einen weniger stark eingeschränkten Betriebsmodus (z.B. Regelbetrieb) übertragen. Im operativen Betrieb können z.B. zusätzliche Software-Module und/oder Apps geladen und ausgeführt werden, deren Ausführung im "starken" Secure Boot Modus nicht zuläsig ist.

Dies hat den Vorteil, dass ein Secure Boot praktikabel realisiert werden kann, insbesondere auf flexibel aktualisierbaren Geräten (z.B. App-Update, Installation von Zusatz-Apps durch einen Anwender). Es ist für den operativen Betriebsmodus kein stringentes "Secure Boot" erforderlich, das die Aktualisierbarkeit beschränken kann.

Vorzugsweise erfolgt für das Anlernen ein "Autistisches Secure Boot", bei dem sichergestellt wird, dass das Gerät nicht von außen angegriffen werden kann. Dabei werden Schnittstellen, insbesondere Netzwerkschnittstellen, Ein-/Ausgabeports, Service-Schnittstellen, Backplane, Debug-Ports, deaktiviert. Dies kann auch als "closed Startup" bezeichnet werden. Weiterhin erfolgt vorzugsweise ein "Secure Boot", bei dem nur zulässige, durch eine kryptographische Prüfsumme geschützte Firmware geladen wird.

Das Ermitteln der Integritäts-Referenzinformation kann zu unterschiedlichen Ereignissen ausgelöst werden, die eine Ereignissteuerungseinheit bzw. Event Handler EH steuert:
- Bei jedem Systemstart, nach Anlegen der Versorgungsspannung, nach Batteriewechsel
- Nach Schließen des Gerätegehäuses (Gehäuseschalter)
- Nach Montage des Gerätes (Montageschalter, der erkennt, wenn das Gerät auf einer Halterung aufgesetzt ist oder an einer Wand montiert ist)
- nach Einspielen eines Updates (Firmware, App-Update)
- nach einer Konfigurationsänderung, bei Beendigung Service-Modue
- Auf Benutzeranforderung
- Nach Ablauf einer Wartezeit (z.B. kann jeweils wöchentlich die Referenz-Integritätsinformation neu gebildet werden)

Die Referenz-Integritätsinformation kann weiterhin Gültigkeitsinformation aufweisen, die neben der kryptographischen Prüfsumme verifiziert bzw. geprüft werden, um zu ermitteln, ob eine Referenz-Integritätsinformation gültig ist (z.B. Zeitstempel, Gültigkeitsdauer, Boot-Counter, Update-Counter, Firmware-Version, Geräte-Hardwareversion). Dadurch kann insbesondere sichergestellt werden, dass nicht eine alte, frühere Referenz-Integritätsinformation verwendet wird.

In einer Ausführungsform der Erfindung ist denkbar, dass das Gerät quasi redundant bzw. gedoppelt bzw. gespiegelt ausgeschaltet ist. Dann ist das redundante "Slave"-Gerät quasi baugleich zu dem "Master"-Gerät gestaltet. In die Figur 2 könnte dann das "Master"-Gerät und in die Figur 1 das "Sla-ve"-Gerät interpretiert werden. So erhält das "Master"-Gerät vom "Slave"-Gerät die generierte Referenz-Integritätsinformation für den Vergleich mit der Laufzeit-Integritätsinformation.

In einer Ausführungsform wird die Laufzeitintegritäts-Referenzinformation unter Verwendung eines nicht in den Figuren dargestellten Trusted Platform Modules TPM vom Referenz-Integritätsinformation-Generator REFG gebildet und kryptographisch geschützt. Dazu werden Integritäts-Messwerte ermittelt und ein PCR-Register des TPMs davon abhängig aktualisiert. Der Wert wird vom TPM digital signiert bzw. attestiert, d.h. das TPM-Modul bildet eine kryptographisch geschützte, digital signierte Datenstruktur, die den Inhalt des PCR-Registers bestätigt. Die Attestierung wird hierbei nicht einem anderen Gerät bereitgestellt, sondern von diesem bereitgestellt und geprüft. Die Attestierung wird innerhalb des Gerätes von der Laufzeit-Integritätsselbstüberwachungsfunktion IC verwendet, um die Integrität der Referenzdaten in einem anderen Betriebsmodus zu prüfen.

Dazu kann insbesondere Linux Integrity Measurement Architecture (IMA) verwendet werden. D.h. die IMA-Measurement List wird durch den vom Referenz-Integritätsinformation-Generator REFG gebildet. Im regulären Betrieb RB wird die Referenz-Integritätsinformation anhand der TPM-Attestierung geprüft, und falls diese gültig ist, wird deren Inhalt zur Prüfung der zur Laufzeit ermittelten Integritätsmessungen verwendet. D.h. dass eine TPM-Attestierung, die auf dem Gerät in einem geschützten Betriebsmodus erstellt wurde, auf dem gleichen Gerät später in einem operativen Betriebsmodus, d.h. im regulären Betrieb, überprüft wird.

Eine Attestierungsdatenstruktur kann den PCR-Wert durch eine digitale Signatur bestätigen. Optional ist eine Nonce vorhanden, insbesondere ein Zufallswert, der von dem Knoten bereitgestellt wurde, für den die Attestierung ausgestellt wird. Weiterhin ist beispielhaft eine (stark verkürzt dargestellte) Integritäts-Measurement-Liste (IMA-Measurement-Datei) enthalten. Diese enthält eine Vielzahl von Messungen. Ein Eintrag gibt die Registernummer des PCR-Registers (beispielsweise Nr. 10) an einen Template-Hash-Wert, einen Filedate-HashWert und einen Hinweis auf den Dateinamen wieder (siehe beispielsweise https://sourceforge.net/p/linux-ima/wiki/Home/)

Diese Werte der IMA-Measurement-Liste werden z.B. wie folgt bestimmt:
template-hash: shal hash(filedata-hash length, filedata-hash, pathname length, pathname)
filedata-hash: sha256 hash(filedata)

Die IMA-basierte Ausführungsform hat den Vorteil, dass sie mit relativ wenig Aufwand realisierbar ist. Dabei ist es insbesondere möglich, die in der Anlernphase ermittelte und durch die TPM-Attestierung bestätigte IMA-Liste (Referenzinformation) mit der beim Systemstart des operativen, regulären Betriebsmodus ermittelten IMA-Liste auf Übereinstimmung zu vergleichen. Dies hat den Vorteil, dass die Zulässigkeit der im operativen Betrieb ermittelten IMA-Liste einfach durch das Gerät selbst geprüft werden kann.

Eine weitere Möglichkeit, die Referenz-IMA-Liste zu prüfen, ist, zur Laufzeit wiederholt die Messungen zu wiederholen und den ermittelten Messwert auf Übereinstimmung mit dem in der Referenz-IMA-Liste hinterlegten Messwert zu prüfen.

Es wäre möglich, die Referenzinformation als vorbereitete digital signierte Datenstruktur bereitzustellen. Sie könnte z.B. in einem Firmware-Image des Gerätes enthalten sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Steuereinheit (D) für eine Integritätsselbstüberwachung geeignet für ein insbesondere in einer Automatisierungsumgebung verwendbares Gerät, aufweisend:
- eine Bereitstellungseinheit (REFG), die dazu ausgelegt ist, eine kryptographisch geschützte Referenz-Integritätsinformation bereitzustellen, welche während einer geschützten Betriebsphase (SB) des Geräts erstellt wird,
- eine Vergleichseinheit (ICH), die dazu ausgelegt ist, die Referenz-Integritätsinformation (REFP) mit einer Laufzeit-Integritätsinformation zu vergleichen, die während einer operativen Betriebsphase des Geräts ermittelt wird, und
- einer Ausgabeeinheit (R), die dazu ausgelegt ist, eine zumindest eine Folgemaßnahme einleitenden Nachricht abhängig vom Vergleichsergebnis auszugeben.

2. Steuereinheit nach dem vorhergehenden Anspruch, **dadurch gekennzeichnet, dass**, wenn das Vergleichsergebnis eine Abweichung der Referenz-Integritätsinformation mit der Laufzeit-Integritätsinformation repräsentiert,
die Nachricht einen Alarm, einen Neustart, ein Löschen von Daten, ein Leuchten einer Diode (DD) und/oder ein Herstellen einer Schaltverbindung (S) für die Folgemaßnahme einleiten kann.

3. Steuereinheit nach dem vorhergehenden Anspruch 1, **dadurch gekennzeichnet, dass**, wenn das Vergleichergebnis eine Übereinstimmung der Referenz-Integritätsinformation mit der Laufzeit-Integritätsinformation repräsentiert, eine Bestätigungsnachricht (NF) ausgegeben werden kann.

4. Steuereinheit nach einem der vorhergehenden Ansprüche, **dadurch gekennzeichnet, dass** die Referenz-Integritätsinformation und die Laufzeit-Integritätsinformation jeweils mindestens einen Wert für ein oder mehrere Integritätsprüfsummen (CS) von Dateien und/oder Konfigurationsdaten und/oder zumindest einen Informationswert zu ein oder mehreren Hardwarekomponenten des Geräts umfassen.

5. Steuereinheit nach einem der vorhergehenden Ansprüche, **dadurch gekennzeichnet, dass** die geschützte Betriebsphase während einer Startphase des Geräts abläuft.

6. Steuereinheit nach einem der vorhergehenden Ansprüche, **dadurch gekennzeichnet, dass** der Schutz der Betriebsphase durch Beschränkungen erreicht werden kann.

7. Steuereinheit nach einem der vorhergehenden Ansprüche, **dadurch gekennzeichnet, dass** die Referenz-Integritätsinformation ereignisgesteuert ermittelt und/oder erstellt werden kann.

8. Steuereinheit nach einem der vorhergehenden Ansprüche, **dadurch gekennzeichnet, dass** die Referenz-Integritätsinformation unter Verwendung eines Trusted Platform Module ermittelt und/oder erstellt und kryptographisch geschützt werden kann.

9. Steuereinheit nach einem der vorhergehenden Ansprüche, **dadurch gekennzeichnet, dass** mindestens ein Wert der Referenz-Integritätsinformation attestiert werden kann.

10. Steuereinheit nach einem der vorhergehenden Ansprüche, **dadurch gekennzeichnet, dass** mehrere Werte der Referenz-Integritätsinformation gegebenenfalls mit Zusatzinformationen in einer IMA-Liste (Integrity Measurment Architecture) organisiert sind.

11. Steuereinheit nach dem vorhergehenden Anspruch, **dadurch gekennzeichnet, dass** die IMA-Liste mindestens einem Zufallswert umfasst.

12. Betriebsverfahren für ein insbesondere in einer Automatisierungsumgebung verwendbares Gerät, wobei folgende Verfahrensschritte für eine Integritätsselbstüberwachung ausgeführt werden:
- Bereitstellen einer kryptographisch geschützten Referenz-Integritätsinformation, welche während einer geschützten Betriebsphase des Geräts erstellt wird,
- Vergleichen der Referenz-Integritätsinformation mit einer Laufzeit-Integritätsinformation, die während einer operativen Betriebsphase des Geräts ermittelt wird,
- Ausgeben einer zumindest eine Folgemaßnahme einleitenden Nachricht abhängig vom Vergleichsergebnis.

13. Betriebsverfahren nach dem vorhergehenden Anspruch, **dadurch gekennzeichnet, dass** die Referenz-Integritätsinformation und die Laufzeit-Integritätsinformation jeweils mindestens einen Wert für ein oder mehrere Integritätsprüfsummen von Dateien und/oder Konfigurationsdaten und/oder zumindest einen Informationswert zu ein oder mehreren Hardwarekomponenten des Geräts umfassen.

14. Betriebsverfahren nach einem der vorhergehenden Verfahrensansprüche, **dadurch gekennzeichnet, dass** die geschützte Betriebsphase während einer Startphase des Geräts abläuft.

15. Betriebsverfahren nach einem der vorhergehenden Verfahrensansprüche **dadurch gekennzeichnet, dass** der Schutz der Betriebsphase durch Beschränkungen erreicht wird.

16. Betriebsverfahren nach einem der vorhergehenden Verfahrensansprüche, **dadurch gekennzeichnet, dass** die Referenz-Integritätsinformation ereignisgesteuert ermittelt und/oder erstellt wird.

17. Betriebsverfahren nach einem der vorhergehenden Verfahrensansprüche, **dadurch gekennzeichnet, dass** die Referenz-Integritätsinformation unter Verwendung eines Trusted Platform Module ermittelt und/oder erstellt und kryptographisch geschützt wird.

18. Betriebsverfahren nach einem der vorhergehenden Verfahrensansprüche, dass mindestens ein Wert der Referenz-Integritätsinformation attestiert wird.

19. Betriebsverfahren nach einem der vorhergehenden Verfahrensansprüchen, **dadurch gekennzeichnet, dass** mehrere Werte der Referenz-Integritätsinformation gegebenenfalls mit Zusatzinformationen in einer IMA-Liste organisiert werden.

20. Betriebsverfahren nach dem vorhergehenden Anspruch, **dadurch gekennzeichnet, dass** die IMA-Liste mindestens einem Zufallswert umfasst.
